# FASCICULE DE BREVET EUROPEEN

(11) **EP 1 942 272 B1**
(45) Date de publication et mention de la délivrance du brevet: **17.04.2013**
(21) Numéro de dépôt: 07150172.0
(22) Date de dépôt: 19.12.2007
(51) Int. Cl.: F02M 35/10, F02M 35/104, F01M 11/02

(54) **Dispositif de calage d'un répartiteur d'admission d'air sur un moteur**
Vorrichtung zum Befestigen eines Ansaugluftverteilers auf einem Motor
Device for supporting an air intake distributor on an engine

(30) Priorité: 04.01.2007 FR 0752529
(43) Date de publication de la demande: 09.07.2008
(73) Titulaire: PEUGEOT CITROËN AUTOMOBILES S.A., 78140 Vélizy Villacoublay (FR)
(72) Inventeur: Marion, Thierry, 95120 Ermont (FR); Renault, Cyril, 95180 Menucourt (FR); Massieux, Michael, 51000 Châlons-en-Champagne (FR)
(74) Mandataire: Ménès, Catherine

(56) Documents cités:
- DE-C1- 19 548 024
- FR-A1- 2 848 603
- JP-A- 5 065 857
- JP-A- 2003 201 928
- US-A- 5 887 560

## Description

Le domaine technique de l'invention est celui des dispositifs de calage d'un répartiteur d'admission d'air sur un moteur à combustion interne d'un véhicule automobile, dans le cas où le répartiteur est situé en surplomb du moteur et est prolongé par un doseur d'air placé à distance dudit moteur. Pour être plus précis, il s'agit d'un dispositif de calage effectué par l'intermédiaire du doseur d'air. Pour ce type de configuration, le doseur d'air, qui est doté d'un certain poids, et qui est placé à une extrémité du répartiteur, augmente l'effet bras de levier du répartiteur, et risque, à la moindre sollicitation, de le casser. Les dispositifs de calage selon l'invention, mettent en oeuvre des moyens mécaniques pour permettre d'atténuer l'influence du doseur sur le répartiteur, afin de limiter les probabilités de cassure, lesdits moyens étant ensuite aménagés pour occuper d'autres fonctions, et en particulier, pour servir de relais de fixation à des conduits d'acheminements de flux énergétiques et à d'autres pièces situées sous le capot du véhicule.

Les caractéristiques d'implantation des doseurs d'air sous le capot d'un véhicule automobile ont déjà fait l'objet de plusieurs brevets. On peut, par exemple, citer le brevet FR 2380428 qui se rapporte à l'utilisation d'un doseur d'air au sein d'un moteur. Ce brevet ne décrit aucun support particulier du doseur, et ne fait jamais mention d'un quelconque problème lié à la géométrie d'implantation du répartiteur sur le moteur. Le document JP 2003 201 428 montre un ensemble selon le préambule de la revendication 1.

Les dispositifs de calage du répartiteur d'admission d'air par l'intermédiaire du doseur d'air selon l'invention, sont parfaitement adaptés aux exigences de poids et d'encombrement réduits, requises pour les objets destinés à être embarqués sur un véhicule automobile. En effet, dispositifs de calage selon l'invention font intervenir une pièce en matériau léger, ayant originellement une fonction bien identifiée, ladite pièce étant aménagée, sans surcroît de matière ni augmentation de volume, pour occuper d'autres fonctions. De façon plus générale, les dispositifs de calage selon l'invention tendent à concentrer certaines fonctions sur des pièces légères, occupant les rares espaces restreints, laissés disponibles sous le capot du véhicule.

La présente invention a pour objet un dispositif de calage d'un répartiteur d'admission d'air sur un moteur à combustion interne d'un véhicule automobile, le répartiteur étant situé en surplomb du moteur et étant prolongé par un doseur d'air placé à distance dudit moteur. La principale caractéristique d'un dispositif de calage selon l'invention est qu'il comprend une pièce de soutien en matière plastique, insérée entre le répartiteur et le moteur, de façon à supporter le doseur et à réduire les contraintes exercées par ledit doseur sur ledit répartiteur. En effet, pour certaines catégories de moteur, le répartiteur est fixé sur ledit moteur, de sorte que son centre de gravité se retrouve à l'extérieur de sa surface de sustentation. Comme le doseur est suspendu au bout du répartiteur et qu'il possède un poids non négligeable, il accentue les contraintes sur ledit répartiteur au niveau de son point de fixation sur le moteur, et peut ainsi engendrer sa rupture. Une pièce tampon en matière plastique est intercalée entre le répartiteur et le moteur, afin de soutenir ledit répartiteur, en atténuant notamment l'influence du poids du doseur d'air sur le répartiteur.

Avantageusement, le répartiteur d'admission d'air possède une entrée d'air située en dessous d'une sortie d'air, ledit répartiteur étant solidarisé audit moteur au niveau de ladite sortie, et le doseur d'air est placé au niveau de ladite entrée. Cette configuration doit être interprétée par rapport à la hauteur du moteur, qui est sa dimension prise par rapport à un axe vertical lorsqu'il est positionné sous le capot du véhicule. Le répartiteur se retrouve donc en position inclinée, son point haut correspondant à la sortie d'air, c'est-à-dire à son point de fixation sur le moteur, et son point bas correspondant à l'entrée d'air où est fixé le doseur d'air. De cette manière, le plan dans lequel est situé le répartiteur fait un angle aigu avec la face verticale du moteur se trouvant la plus proche dudit répartiteur.

De façon préférentielle, la pièce de soutien vient en butée à la fois contre le moteur et contre le doseur d'air. L'interposition de cette pièce entre le moteur et le répartiteur, empêche l'extrémité libre du répartiteur, où est notamment située l'entrée d'air et où est fixé le doseur, de se rapprocher du moteur.

De façon avantageuse, la pièce de soutien vient en butée à la fois contre le moteur et contre le doseur d'air. Il s'agit de la position d'implantation optimisée de la pièce, pour favoriser son rôle de soutien du répartiteur vis-à-vis du moteur.

Préférentiellement, le doseur est relié à la pièce de soutien, au moyen de plusieurs points d'ancrage, matérialisés au niveau de ladite pièce, par des protubérances discoïdales munies d'un alésage central. En effet, afin de maintenir la pièce de soutien dans la même position optimisée, il est nécessaire de la fixer solidement au doseur, pour éviter toute dérive de positionnement. Les points d'ancrage peuvent revêtir toute forme, dès lors qu'ils ne sont pas trop nombreux ni trop encombrants.

Selon l'invention, la pièce de soutien possède sur sa surface, à des endroits bien identifiés, des empreintes dont les caractéristiques géométriques et structurelles ont été définies pour recevoir des éléments de fixations d'au moins un conduit de flux énergétiques. La pièce de soutien initialement prévue pour soutenir le répartiteur, est ainsi aménagée simplement, sans accroître son volume d'encombrement, pour servir de pièce relais de fixation à divers conduits énergétiques. En effet, les conduits énergétiques sous le capot d'un véhicule automobile, sont nombreux et de longueur importante, et il demeure toujours compliqué de trouver des surfaces solides disponibles, sur lesquelles fixer ces conduits, en raison d'une optimisation permanente des volumes laissés vacants autour du moteur. La pièce de soutien devient ainsi multifonctionnelle.

De façon préférentielle, les empreintes peuvent être représentées par des protubérances, des évidements, des trous ou des pattes de fixation. L'un des objectifs visés par ces empreintes, outre le fait qu'elles vont servir à recevoir des éléments de fixation de conduits énergétiques, est de contribuer à maintenir constant le volume de la pièce de soutien. Elles sont donc généralement peu marquées et s'appuient sur des reliefs de la dite pièce déjà existants. Leur forme n'est pas limitative.

De façon avantageuse, les empreintes servent à fixer en même temps, des conduits relatifs au transport d'huile, d'énergie électrique, et de carburant. La surface et le volume de la pièce de soutien sont ainsi rentabilisés au maximum, en servant de relais de fixation à tous les conduits énergétique croisant leur chemin avec ladite pièce. A priori, il n'y a pas d'incompatibilité sur le fait que les conduits se croisent au niveau de ladite pièce, ni même se touchent entre eux. Cette pièce présente ainsi de limitation ou de restriction.

Préférentiellement, la pièce possède également des empreintes pour fixer le cache de style.

De façon avantageuse, la pièce de soutien est réalisée par moulage. Ce procédé de fabrication offre une multiplicité de possibilités quant à la forme, la géométrie et le lieu de d'emplacement desdites empreintes sur ladite pièce.

De façon préférentielle, la pièce de soutien est réalisée dans une matière plastique usuelle, ayant des propriétés de tenue à la température.

Outre le fait d'assurer leur fonction originelle de calage, les dispositifs selon l'invention présentent l'avantage de cumuler d'autres fonctions, plutôt passives, grâce à l'aménagement d'une pièce facile à fabriquer, légère et peu coûteuse. Ils présentent également l'avantage de contribuer à stabiliser l'installation de diverses pièces sous le capot du véhicule, comme, par exemple, des conduits de flux énergétiques, en concentrant les points de fixation.

On donne ci-après une description détaillée d'un mode de réalisation préféré d'un dispositif de calage selon l'invention en se référant aux figures 1 à 8.
- La figure 1 est une vue de coté d'un moteur selon l'invention, montrant le répartiteur en porte à faux ainsi que la pièce de soutien.
- La figure 2 est une vue de face du moteur de la figure1.
- La figure 3 est une vue en perspective de la pièce de soutien appartenant à un dispositif selon l'invention.
- La figure 4 est une vue en perspective de la pièce de soutien de la figure 3, mais sous un angle différent.
- La figure 5 est une vue en perspective d'une partie de la pièce de soutien montrant la fixation du tuyau de carburant.
- La figure 6 est une vue en perspective d'une partie de la pièce de soutien montrant la fixation du remplissage d'huile.
- La figure 7 est une vue en perspective d'une partie de la pièce de soutien montrant une première fixation d'un conduit électrique.
- La figure 8 est une vue en perspective d'une partie de la pièce de soutien montrant une deuxième fixation du conduit électrique de la figure 7.

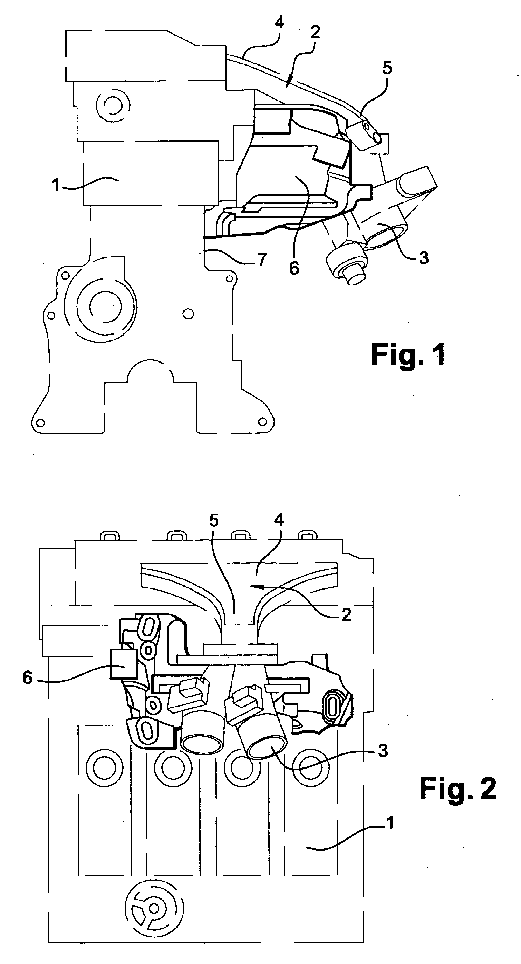

En se référant aux figures 1 et 2, un dispositif de calage selon l'invention est particulièrement adapté à une configuration pour laquelle un répartiteur 2 est à la fois relié à un moteur 1 à combustion interne, et à un double doseur 3 d'air, dont les fonctions sont de doser la pression de l'air frais en créant une perte de charge supplémentaire du coté de l'admission d'air, d'augmenter le taux d'EGR en vannant l'admission, et de court-circuiter le refroidisseur d'air suralimenté pour admettre de l'air plus chaud. Pour cette cofiguration, le répartiteur 2 a la forme d'une pièce triangulaire de faible épaisseur, dont la partie évasée 4 correspond à une sortie d'air, et dont la partie resserrée 5 correspond à une entrée d'air, le doseur 3 étant relié au répartiteur 2 en amont de ladite entrée d'air. Les figures 1 et 2, montrent le moteur 1 dans la position selon laquelle il est monté dans le véhicule automobile. De cette manière, l'axe longitudinal dudit moteur 1 correspond à un axe vertical. Le répartiteur 2 est solidarisé au moteur 1 au niveau de sa partie évasée 4, de telle manière que sa partie resserrée 5, correspondant à l'entrée d'air, se retrouve en dessous de ladite partie évasée 4. Le répartiteur 2 se retrouve en position inclinée et en surplomb du moteur 1, et le doseur 3, qui est situé dans le prolongement de la partie resserrée 5 du répartiteur 2, exerce à cause de son poids, un effort sur ledit répartiteur 2 au niveau de son point de fixation sur le moteur 1 correspondant à sa partie évasée 4. Afin de diminuer cet effet de porte à faux, le dispositif de calage selon l'invention, met en oeuvre une pièce de soutien 6 en plastique, qui est insérée entre le moteur 1 et le répartiteur 2, ladite pièce 6 venant en butée à la fois contre le doseur 3 et contre l'une 7 des faces verticales dudit moteur 1. Autrement dit, la pièce 6 de soutien renforce la stabilité d'implantation du répartiteur 2, en agissant en partie, sur le doseur 3. Cette pièce 6 sert donc à soutenir le répartiteur 2 afin de lui empêcher d'effectuer de grands déplacements et donc de maintenir sa tenue mécanique. La pièce 6 de soutien en plastique a des modes vibratoires d'une fréquence de 60 Hz pour assurer son intégrité.

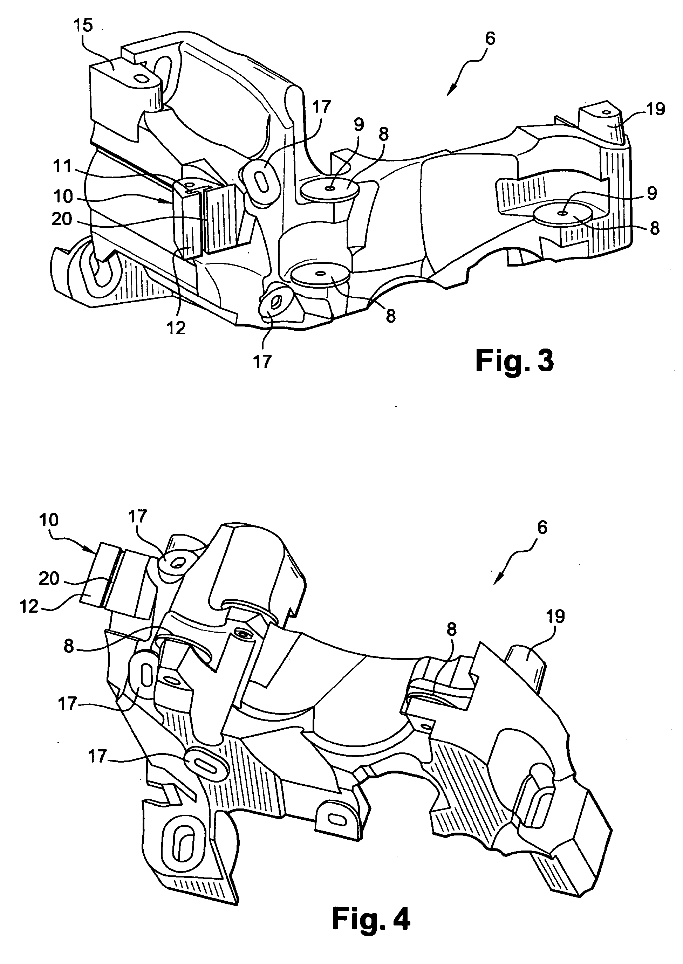

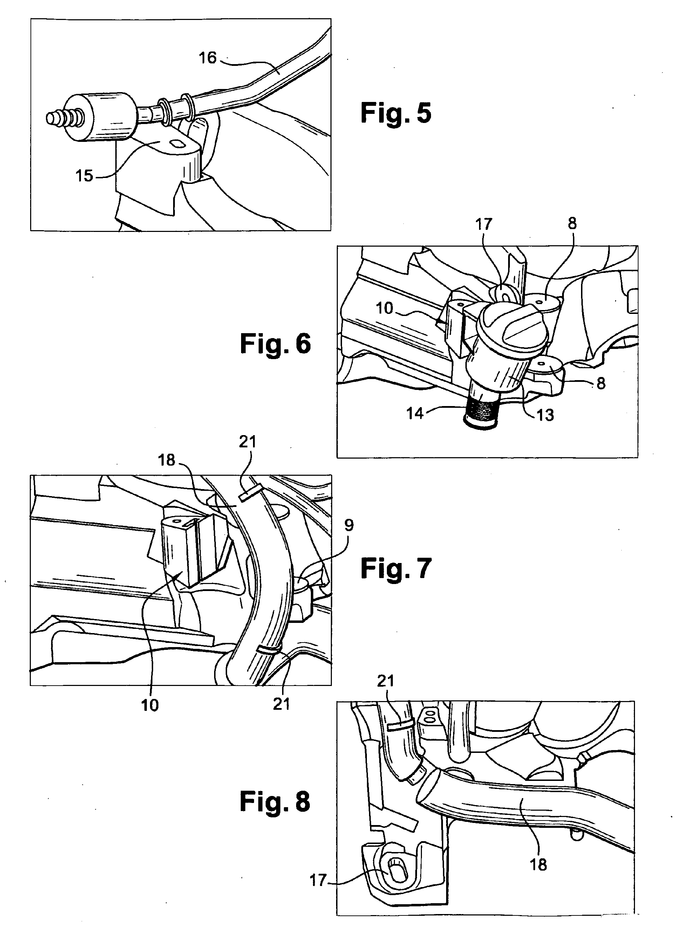

En se référant aux figures 3 et 4, la pièce 6 de soutien a une géométrie complexe dictée par la topographie des éléments qui l'entourent et sur lesquels elle vient s'emboîter, à savoir le doseur 3, une partie du répartiteur 2 et une paroi verticale 7 du moteur 1. En se référant à la figure 3, la pièce 6 possède trois protubérances 8 discoïdales, présentant chacune un alésage central 9, lesdites protubérances 8 constituant une partie des éléments d'ancrage du doseur 3 sur ladite pièce 6. Ladite pièce 6 comporte à l'une de ses extrémités une protubérance 19, destinée à fixer le cache de style, qui est une pièce plane d'habillage moteur, destinée à camoufler certaines parties disgracieuses du moteur 1. La pièce de soutien 6 comprend également une autre protubérance 10, traversée par un canal 11 aplati de section rectangulaire, ledit canal 11 débouchant sur une face plane 12 de ladite protubérance 10 par l'intermédiaire d'une fente 20 longitudinale dont la longueur est identique à celle du canal 11. En se référant à la figure 6, cette protubérance 10 sert à supporter le bouchon 13 de remplissage d'huile, destiné à permettre d'approvisionner le carter d'huile, au moyen d'une tubulure 14. En se référant aux figures 3,4 et 5, la pièce de soutien est dotée d'une bosse 15 ayant une géométrie prédéterminée pour fixer le conduit 16 de carburant. Enfin, en se référant aux figures 3,4,5 et 6, la pièce de soutien 6 dispose d'une multiplicité de surfaces d'appui 17 ajourées et munies de pattes 21 de maintien, dont les emplacements sont étudiés pour fixer, au moyen desdites pattes 21 et en plusieurs endroits, des conduits électriques 18.

Tous les points d'ancrages destinés à fixer les différents objets 13,16,18 décrits ci-avant, sont positionnés sur la pièce de soutien 6, de manière à ce que lesdits objets 13,16,18 n'interférent pas entre eux et ne se chevauchent pas de façon désordonnée.

## Revendications

1. Ensemble comportant :
• un moteur (1) à combustion interne d'un véhicule automobile associé à un répartiteur (2) d'admission d'air étant situé en surplomb du moteur (1) et étant prolongé par un doseur (3) d'air placé à distance dudit moteur (1),
• une pièce de soutien (6) insérée entre le répartiteur (2) et le moteur (1), de façon à supporter le doseur (3) et à réduire les contraintes exercées par ledit doseur (3) sur ledit répartiteur (2),
• des conduits (16; 18) relatifs au transport d'huile, d'énergie électrique, et de carburant,
**caractérisé en ce que** la pièce de soutien (6) est en matière plastique et possède sur sa surface, à des endroits bien identifiés, des empreintes (10,15,17,21) dont les caractéristiques géométriques et structurelles ont été définies pour recevoir les éléments de fixations des conduits relatifs au transport d'huile, d'énergie électrique, et de carburant, et **en ce que** les empreintes sont positionnées sur la pièce de soutien (6), de manière à ce que les différents conduits fixés aux empreintes, n'interférent pas entre eux et ne se chevauchent pas de façon désordonnée.

2. Ensemble selon la revendication 1, **caractérisé en ce que** le répartiteur (2) d'admission d'air possède une entrée (5) d'air située en dessous d'une sortie (4) d'air, ledit répartiteur (2) étant solidarisé audit moteur (1) au niveau de ladite sortie (4), et le doseur (3) d'air est placé au niveau de ladite entrée (5).

3. Ensemble selon la revendication 2, **caractérisé en ce que** la pièce (6) de soutien vient en butée à la fois contre le moteur (1) et contre le doseur d'air (3).

4. Ensemble selon la revendication 3, **caractérisé en ce que** le doseur (3) est relié à la pièce (6) de soutien, au moyen de plusieurs points d'ancrage, matérialisés au niveau de ladite pièce (6), par des protubérances discoïdales (8) munies d'un alésage central (9).

5. Ensemble selon l'une quelconque des revendications précédentes, **caractérisé en ce que** les empreintes (10,15,17,21) peuvent être représentées par des protubérances, des évidements, des trous ou des pattes de fixation.

6. Ensemble selon l'une quelconque des revendications précédentes, **caractérisé en ce que** la pièce (6) de soutien possède également des empreintes (19) pour fixer le cache de style.

7. Ensemble selon l'une quelconque des revendications précédentes, **caractérisé en ce que** la pièce (6) de soutien est réalisée par moulage.

8. Ensemble selon la revendication 7, **caractérisé en ce que** la pièce (6) de soutien est réalisée dans une matière plastique usuelle, ayant des propriétés de tenue à la température.

## Claims

1. An assembly comprising:
■ an internal combustion engine (1) of a motor vehicle associated with an air intake splitter (2) being situated overhanging the engine (1) and being extended by an air choke (3) placed at a distance from the said engine (1),
■ a support piece (6) inserted between the splitter (2) and the engine (1), so as to support the choke (3) and to reduce the stresses exerted by the said choke (3) on the said splitter (2),
■ ducts (16; 18) relating to the transporting of oil, electrical energy, and fuel,
**characterized in that** the support piece (6) is of plastic material and has on its surface, at readily identified locations, sockets (10, 15, 17, 21), the geometrical and structural characteristics of which have been defined to receive the attachment elements of the ducts relating to the transporting of oil, electrical energy, and fuel, and **in that** the sockets are positioned on the support piece (6) such that the different ducts fixed to the sockets do not interfere with one another and do not overlap one another in a disordered manner.

2. The assembly according to Claim 1, **characterized in that** the air intake splitter (2) has an air inlet (5) situated beneath an air outlet (4), the said splitter (2) being secured to the said engine (1) at the level of the said outlet (4), and the air choke (3) is placed at the level of the said inlet (5).

3. The assembly according to Claim 2, **characterized in that** the support piece (6) abuts both against the engine (1) and against the air choke (3).

4. The assembly according to Claim 3, **characterized in that** the choke (3) is connected to the support piece (6), by means of several anchoring points, formed at the level of the said piece (6), by discoidal protuberances (8) provided with a central bore (9).

5. The assembly according to any one of the preceding claims, **characterized in that** the sockets (10, 15, 17, 21) can be represented by protuberances, apertures, holes or fixing lugs.

6. The assembly according to any one of the preceding claims, **characterized in that** the support piece (6) also has sockets (19) for fixing the styling mask.

7. The assembly according to any one of the preceding claims, **characterized in that** the support piece (6) is produced by moulding.

8. The assembly according to Claim 7, **characterized in that** the support piece (6) is made from a conventional plastic material having temperature-resistance properties.

## Patentansprüche

1. Einheit, die aufweist:
• einen Verbrennungsmotor (1) eines Kraftfahrzeugs, der mit einem Ansaugluftverteiler (2) verbunden ist, der sich oberhalb des Motors (1) befindet und von einem Luftdosierer (3), der von dem Motor (1) entfernt platziert ist, verlängert wird,
• einen Stützteil (6), der zwischen den Verteiler (2) und den Motor (1) derart eingefügt ist, dass der Dosierer (3) getragen wird und die Belastungen, die von dem Dosierer (3) auf den Verteiler (2) ausgeübt werden, verringert werden,
• Leitungen (16; 18) in Zusammenhang mit dem Transport von Öl, elektrischer Energie und Kraftstoff,
**dadurch gekennzeichnet, dass** der Stützteil (6) aus Kunststoff besteht und auf seiner Oberfläche an gut identifizierten Stellen Abdrücke (10, 15, 17, 21) besitzt, deren geometrische und Strukturmerkmale definiert wurden, um die Befestigungselemente der Leitungen in Zusammenhang mit dem Transport von Öl, elektrischer Energie und Kraftstoff aufzunehmen, und dass die Abdrücke auf dem Stützteil (6) derart positioniert sind, dass sich die verschiedenen Leitungen, die an den Abdrücken befestigt sind, nicht gegenseitig stören und sich nicht unordentlich überlagern.

2. Einheit nach Anspruch 1, **dadurch gekennzeichnet, dass** der Ansaugluftverteiler (2) einen Lufteingang (5) aufweist, der sich unterhalb eines Luftausgangs (4) befindet, wobei der Verteiler (2) fest mit dem Motor (1) auf dem Niveau des Ausgangs (4) verbunden ist und der Luftdosierer (3) auf dem Niveau des Eingangs (5) platziert ist.

3. Einheit nach Anspruch 2, **dadurch gekennzeichnet, dass** der Stützteil (6) sowohl gegen den Motor (1) als auch gegen den Luftdosierer (3) zum Anschlagen kommt.

4. Einheit nach Anspruch 3, **dadurch gekennzeichnet, dass** der Dosierer (3) mit dem Stützteil (6) mittels mehrerer Verankerungsstellen verbunden ist, die auf dem Niveau des Stützteils (6) aus scheibenförmigen Vorsprüngen (8), die mit einer zentralen Bohrung (9) versehen sind, bestehen.

5. Einheit nach einem der vorhergehenden Ansprüche, **dadurch gekennzeichnet, dass** die Abdrücke (10, 15, 17, 21) durch Vorsprünge, Aussparungen, Löcher oder Befestigungspratzen dargestellt werden können.

6. Einheit nach einem der vorhergehenden Ansprüche, **dadurch gekennzeichnet, dass** der Stützteil (6) ebenfalls Abdrücke (19) aufweist, um die Dekorabdeckmaske zu befestigen.

7. Einheit nach einem der vorhergehenden Ansprüche, **dadurch gekennzeichnet, dass** der Stützteil (6) durch Formen hergestellt ist.

8. Einheit nach Anspruch 7, **dadurch gekennzeichnet, dass** der Stützteil (6) aus einem gewöhnlichen Kunststoff, der Temperaturbeständigkeitseigenschaften hat, hergestellt ist.
